(19) **Europäisches Patentamt European Patent Office Office européen des brevets**

(11) **EP 4 109 648 B1**

(12) **EUROPEAN PATENT SPECIFICATION**

(45) Date of publication and mention
of the grant of the patent:
**21.05.2025   Bulletin 2025/21**

(21) Application number: **21382553.2**

(22) Date of filing: **23.06.2021**

(51) International Patent Classification (IPC):
*H01M 50/204* (2021.01)     *H01M 50/284* (2021.01)
*H01M 50/258* (2021.01)     *H01M 50/249* (2021.01)
*H01M 50/233* (2021.01)     *H01M 50/213* (2021.01)
*B62M 6/90* (2010.01)     *B62J 43/13* (2020.01)

(52) Cooperative Patent Classification (CPC):
**H01M 50/204; H01M 50/213; H01M 50/233;
H01M 50/249; H01M 50/258; H01M 50/284;**
B62J 43/13; B62M 6/90; H01M 2220/20;
Y02E 60/10

(54) **COMPACT BATTERY FOR ELECTRIC BICYCLES**

KOMPAKTE BATTERIE FÜR ELEKTROFAHRRÄDER

BATTERIE COMPACTE POUR VÉLOS ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2022   Bulletin 2022/52**

(73) Proprietor: **ORBEA, S. COOP.**
**48269 Mallabia (BIZKAIA) (ES)**

(72) Inventors:
• **AUZMENDI ARKARAZO, Beñat**
**48269 Mallabia (BIZKAIA) (ES)**

• **OCHOA ALBERDI, Kepa**
**48269 Mallabia (BIZKAIA) (ES)**
• **NARBAIZA GÓMEZ, Xabier**
**48269 Mallabia (BIZKAIA) (ES)**

(74) Representative: **Cueto, Sénida**
**SP3 Patents S.L.**
**Los Madroños, 23**
**28891 Velilla de San Antonio (ES)**

(56) References cited:
**DE-U1- 202010 010 522     US-A1- 2014 196 970
US-A1- 2020 354 017**

## Description

## Field of the invention

The invention falls within the field of electric bicycles, specifically the electric batteries that power the motors of electric bicycles, and a method of optimizing the distribution of the batteries.

## Prior art

Currently, the use of electric bicycles has increased. These types of bicycles are similar to traditional bicycles, but include an electric motor, powered by a rechargeable electric battery, which helps with pedalling at certain times, known as assisted pedalling. In addition, the use of the electric bicycle is simple; when pedalling, the cyclist creates a force in the pedals that in turn generates momentum due to the distance between the pedals and the bottom bracket, and the force in the pedals is produced by a rotational movement, which results in the cyclist's powers. In addition, the motor assists by delivering programmed power that is normally related to the power provided by the cyclist.

The electric batteries that power the motor of electric bicycles are devices that consist of at least one block of electrochemical cells that can convert stored chemical energy into an electrical current. They also comprise a battery management system, or BMS, and some connectors for connecting to the electrical system. On the one hand, each cell consists of a positive electrode, or cathode, a negative electrode, or anode, and electrolytes that allow ions to move between the electrodes, allowing current to flow out of the battery to carry out the function of powering the electrical system. The most commonly used cells in electric bicycle batteries are the 18650 cell and the 21700 cell. On the other hand, the BMS is an electronic system or protection circuit that controls the rechargeable battery so that it works in balance and prevents the cells from being overcharged, over-discharged or suffering excess consumption.

To understand the operation and internal cell distribution of an electric bicycle battery better, it is necessary to know the parameters that are involved. Firstly, the voltage at which the motor works must be known, as this is what defines the voltage of the system. Generally, in the electric bicycle sector there are 24, 36 and 48 Volt (V) motors, where voltage represents the pressure with which the motor pushes current through a closed electrical circuit. In addition, another parameter that electric batteries comprise is the capacity or power capacity, which represents the autonomy of the system or the energy storage tank. Depending on the power capacity of the motor, the most suitable intensity to power the motor is defined. The intensity is the current that must be supplied to the motor.

Having defined the parameters, it is necessary to explain the difference between the 18650 cells and the 21700 cell.. The 18650 cell has cylindrical dimensions of 18mm in diameter by 65mm high, with an electrical load or nominal capacity of 2 to 3.5Ah and a nominal voltage of 3.6V. Therefore, the 18650 cell has a capacity of 12.6 Wh, while the 21700 cell is an evolution of the previous cell and has cylindrical dimensions of 21mm in diameter by 70mm high, with an electrical load or nominal capacity of 3 to 5 Ah, a nominal voltage of 3.6V and therefore a capacity of 18Wh.

Therefore, to get the motor to work with the desired voltage and intensity, groupings of cells must be made in series and parallel to meet the necessary parameters. Therefore, it must be known that series connections achieve a higher total voltage because the voltages of each cell connected in series are added together. However, parallel connections reach to increase the intensity of the set by dividing the intensity at which each cell works. Both connections can be made together in different combinations and groupings, so that there are infinite possibilities of distribution of the cells.

In short, in order to achieve the voltage required by the motor, groupings of cells must be made in series, and to achieve the intensity required by the motor or a larger one, the cells must be connected in parallel or at least two groupings of complete cells in series like those mentioned above. As the number of parallel series groupings increases, the intensity at which each cell and each series group works decreases, since the intensity required by the motor is divided among the different series groupings. Therefore, it is necessary to connect in parallel when the intensity can be detrimental to the cell, ensuring that the intensity of each cell is not too high and preventing it from being damaged.

Taking into consideration all of the above, the most common bicycles on the market include motors that work at 36V or 48V, so on the one hand, to achieve the above voltages with 3.6V cells, the battery requires groupings of 10 and 14 cells in series respectively.. On the other hand, to achieve a greater power capacity in the motor, since this is achieved by the intensity, as many series groupings as desired must be placed in parallel. In other words, if you want a battery with a capacity of 360Wh, a very common capacity in electric bicycles, 20 cells are needed to make up the battery, because the capacity of a battery is equal to the multiplication of the volts of a cell by the amp hours of a cell by the number of cells.

Knowing the total number N of cells needed in the battery, they have to be distributed, generally in uniform blocks. The distribution of the cells with the location of the BMS and connectors will define the final battery design. A block is defined as a group of cells that is repeated throughout the battery until completing the total number N of cells needed to complete the electric battery. To choose the distribution or the number B of battery blocks or how many cells to place in each block, you must take into account the parameters of length, height, width and shape that you want to give to the battery so that it can be attached to the bicycle frame. Therefore, there can be infinite possibilities of distribution of the cells and battery designs. However, there will only be two possible situations regarding the distribution condition.

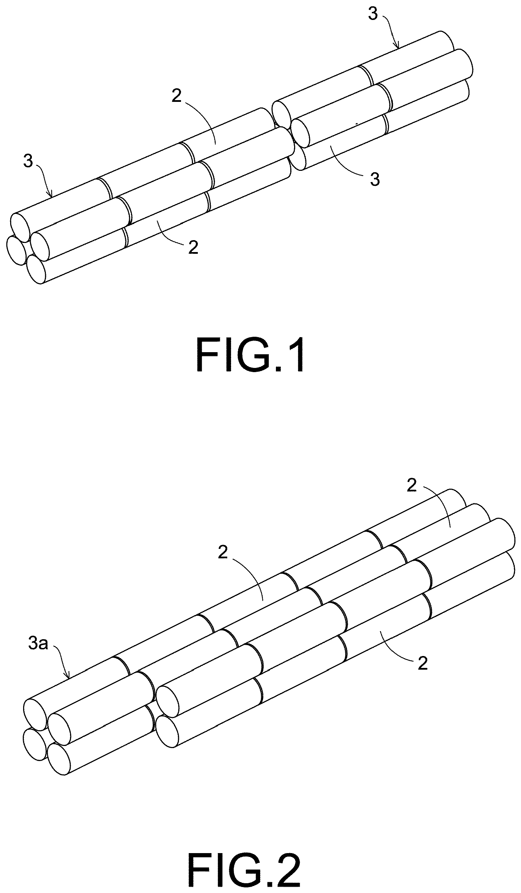

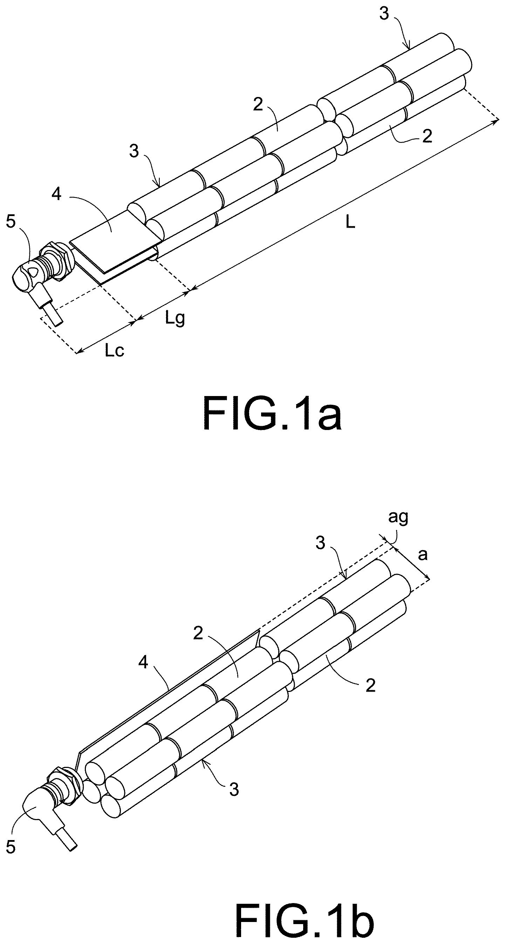

The first situation occurs when the total number N of cells is a multiple of the number B of cell blocks that are repeated, and therefore the battery is made up of uniform blocks of the same number n of cells as shown in figure 1. The second situation occurs when the total number N of cells is not a multiple of the number B of blocks, and in this case the block at the end of the battery is a semi-block of a number n' of cells, i.e., it remains incomplete, as can be seen in Figure 2.

After choosing the distribution of the cells and continuing with the previous example of a 20-cell 360Wh battery, the management system and connector must be added to complete the battery. To do this, the procedure is normally as seen in Figures 1a and 1b where both solutions increase the battery.

On the one hand, in the first situation, it is observed that a distribution of 5 blocks of cells comprising 4 cells each has been chosen, where 20 is the total number N of cells and is a multiple of 5, which are the times that the blocks repeat identically. Therefore, a uniform distribution of a given length, height, and width is achieved. However, adding the BMS and connectors increases the length, as in case a in Figure 1a or the width, as in case b in Figure 1b.

on the other hand, in the second situation, the same thing occurs, as shown in Figure 2, and it can be seen that in this case, a distribution of four blocks has been chosen with six cells that are repeated identically, leaving four free cells forming a semi-block. In this case, the total number N of cells is not a multiple of the number B of blocks and semi-blocks. Therefore, a non-uniform distribution is obtained, of determined length, height and width. However, despite including a semi-block, by adding the BMS and the connectors, the battery increases in length or width as in the previous case.

For the above reasons, a disadvantage of electric bicycles is that depending on the capacity, voltage and/or autonomy required for electric batteries, the total number N of cells and the distribution, and with it the weight, size and form, may vary. Therefore, these types of bicycles present great limitations for designing the batteries, due to the lack of space for the addition of components on the bicycle frame.

Document US 2020/0354017 A1 discloses an electric motor device for pedal assist bicycles, comprising an electric motor and a battery insertable into the frame of the bicycle and configured to actuate the electric motor.

Document US 2014/0196970 A1 discloses another example of an electric system for a bicycle, the system comprising an auxiliary motor integrated into the bicycle frame and an energy storage device for storing energy configured as a battery pack.

As a result, the object of the invention is a battery with an optimized internal cell distribution, and the optimization method thereof for the creation of more compact electric batteries, to facilitate the integration of the electric battery onto the bicycle frame.

### Brief description of the invention

The object of the invention is a battery for electric bicycles with an optimized internal cell distribution and the optimization method for this battery.

In general, these batteries comprise a total number N of cells distributed in at least one block of a number n of cells and/or a semi-block of a number n' of cells, a battery management system and at least one connector for connecting the electrical system. A cell block is defined as a block made up of a group of cells that is repeated along the distribution of the battery, and a semi-block is defined as the block that remains incomplete after the uniform distribution of cells.

The battery of the invention is characterized in that it comprises at least one additional semi-block created by the separation of at least one cell from the block or semi-block at one end of the battery. The separation of the cell from a block or semi-block at the end of the battery from the additional semi-block creates at least two spaces in the battery of the invention. Specifically, it creates a previous space in the block at the end of the battery or increases a previous space in the semi-block at the end of the battery due to the absence of at least one cell and a new space in the additional semi-block created by the absence of at least n-1 cells. In other words, the battery of the invention is created by separating at least one cell from the last block or semi-block to create an additional semi-block with the cell separated together with the management system and the connectors.

The interior distribution of cells of the electric battery described above has the advantage of resulting in a battery with a total length, including the management system known as a BMS and the connectors, which is less than the sum of the lengths of the uniform cell distribution, the management system and the connectors separately.

Thanks to the distribution of cells of the invention and the creation of spaces in the cell blocks, it is possible to integrate the connection between the different elements inside the battery so that it is better protected. In addition, the fact that the connection is protected and in a sealed casing allows the use of better quality connectors, giving greater durability in the electric bicycle battery.

In summary, this optimization in the interior design of the electric battery of the invention makes the battery more compact, providing more possibilities in the design of bicycle frames and meaning that it is possible to reduce them in size.

**Brief description of the figures**

The details of the invention can be seen in the accompanying figures, which do not intend to limit the scope of the invention:

- Figure 1 shows a perspective of an electric battery of the prior art in a situation 1.

- Figure 1a shows a perspective of an electric battery of the prior art in a case a of situation 1.

- Figure 1b shows a perspective of an electric battery of the prior art in a case b of situation 1.

- Figure 2 shows a perspective of an electric battery of the prior art in a situation 2.

- Figure 3 shows in perspective a battery to which the optimization solution and the battery of the invention have been applied.

- Figure 4 shows the same perspective of the battery of the invention as figure 3.

**Detailed description of the invention**

The invention relates to a battery (1) for electric bicycles, with an optimized internal distribution. As explained above, depending on the total number N of cells (2) that are needed, the battery can comprise a different distribution according to the shape or size that is required. In addition, the batteries also comprise a management system (4), commonly known as a BMS, and connectors (5) for electrical connection. Furthermore, the invention also relates to a method for optimizing the internal distribution of the battery (1).

In Figures 1 and 2, two different prior art cell (2) distribution situations are shown for a battery of an electric bicycle. On the one hand, Figure 1 represents a situation 1, where a battery of the prior art with a total number N of twenty cells (2) is shown, where a distribution of five identical blocks (3) of four cells (2) has been chosen. As a result, the total number N of cells (2) is a multiple of the number B of identical blocks (3), which form a uniform distribution. On the other hand, Figure 2 shows a situation 2, where a battery of the prior art is seen with a total number N of twenty-eight cells (2) distributed in four identical blocks (3) of six cells (2) and a semi-block (3a) of four cells (2), where the number B of blocks (3) and semi-blocks (3a) is five. Therefore, in situation 2, the total number N of cells (2) is not a multiple of the number B of blocks (3).

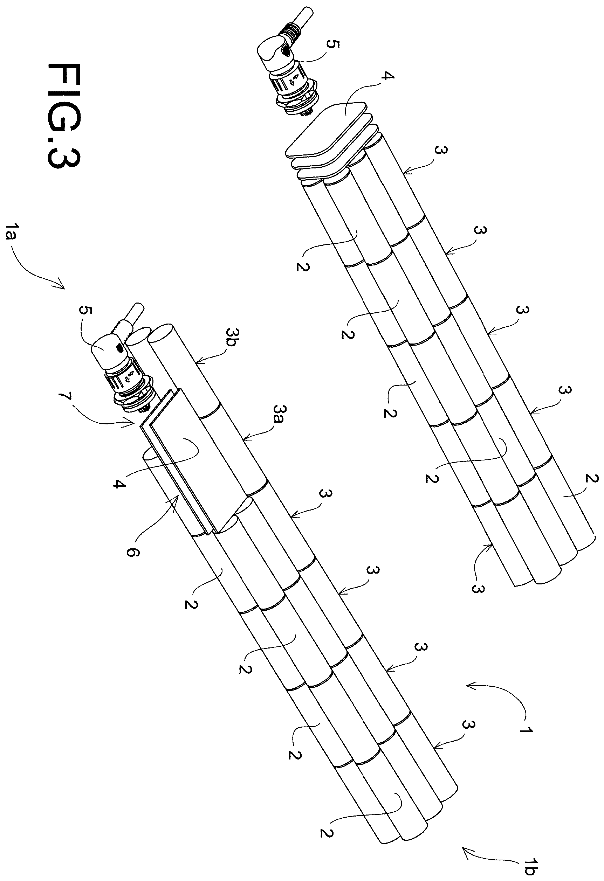

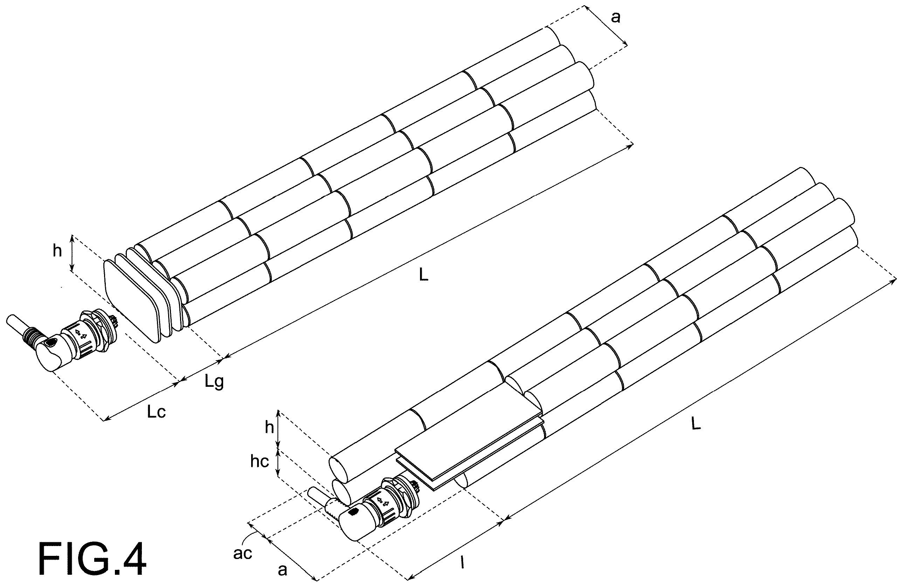

The battery (1) of the invention comprises an optimized distribution of cells (2), whose starting point is a distribution where the battery (1) comprises a total number N of cells (2) necessary to power the engine, distributed in a number B of identical blocks (3) comprising a number n of cells (2) and/or in necessary cases at least one semi-block (3a) of a number n' of cells (2). As can be seen in Figures 3 and 4, the battery (1) of the invention also comprises a management system (4), known as a BMS, and some connectors (5).

The cell (2) distribution of the battery (1) of the invention is characterized in that it comprises at least one additional semi-block (3b), created by at least one cell (2) separated from the block (3) or from a semi-block (3a) of one end (1a) of the battery (1). As a result, the battery (1) of the invention begins to comprise at least a number B+1 of blocks (3) and semi-blocks (3a), and at least a number B-2 of identical blocks (3). In other words, the movement of at least one cell (2) creates an additional semi-block (3b) with at least one cell (2). This means that the block (3) at the end (1a) becomes a semi-block (3a) of at least a number n-1 of cells (2), when the total number N of cells (2) is a multiple of the number B of blocks (3), i.e. when the distribution of cells (2) is in the first situation mentioned above. In the case of the second situation however, the movement of at least one cell (2) creates an additional semi-block (3b) with at least one cell (2) and creates a semi-block (3a) at the end (1a) in a semi-block (3a) of at least a number n'-1 of cells (2), where n' is the number of cells (2) that comprise the semi-block (3a) at the end (1a). For all the above, the total number N of cells (2) of the battery (1) may or may not be a multiple of the number B+1 of blocks (3) and semi-blocks (3a) after the movement of at least one cell (2).

In addition, the battery (1) is also characterized by comprising at least two spaces (6, 7) in the distribution of cells (2) created by the movement of at least one cell (2), where the previous space (6) is created in the block (3) or semi-block (3a) at the end (1a) by the absence of at least one cell (2), while the new space (7) is in the additional semi-block (3b) created by the absence of at least a number n-1 of cells (2). In this way, as shown in Figures 3 and 4, the battery (1) can include the management system (4) and the connectors (5) in spaces (6, 7), obtaining a more compact battery (1), i.e., with a length (L+l) that is less than the sum of the length (L) of the cells (2) plus the length of the management system (Lg) and the length of the connectors (Lc) separately.

$$L+l < L+Lg+Lc$$

In other words, thanks to the distribution of cells (2) mentioned, the battery (1) of the invention increases to a lesser extent than other known batteries when integrating all the components, because the additional length (l) that increases is less than the sum of the component lengths (Lg+Lc).

Due to all of the above, the battery (1) makes it possible to improve the known integration solutions represented in Figures 1a, 1b. Specifically, as seen in Figure 4, the battery (1) of the invention increases its dimensions in a minimal proportion, corresponding to the width of the connector (ac) and the height of the connector (hc) when it is integrated into the new space (7). This leave the battery (1) with a total height (h+hc) and a total width (a+ac), which is a minimum increase with respect to the height (h) and the width (a) of the battery (1) with a uniform distribution of cells (2) plus the management system (4) and connectors (5).

To achieve the battery (1) of the invention, a method of optimizing the distribution of battery cells (2) must be applied. The method is applied to a battery for electric bicycles that comprises a total number N of cells (2) distributed in at least one block (3) of a number n of cells (2) and/or at least one semi-block (3a) of a number n' of cells (2). The first battery also needs to connect to the cells (2), a management system (4) and at least one connector (5).

This method of optimizing the distribution of the battery (1) of the invention is characterized in that it comprises the following steps. Initially, at least one cell (2) is separated from a block (3) or semi-block (3a) at one end (1a) of the battery (1) and at least one cell (2) is placed after the block (3) or semi-block (3a) at the end (1a) creating an additional semi-block (3b), as shown in Figures 3 and 4.

Next, it is observed that the movement of at least one cell (2) creates two spaces (6, 7) in the distribution of cells (2). On the one hand, the previous space (6) is created in the block (3) or semi-block (3a) at the end (1a) of the battery (1), where in situation 1, the block (3) is now a semi-block (3a) due to the absence of at least one cell (2) displaced towards an additional semi-block (3b), and in situation 2 the semi-block (3a) increases the previous space (6) due to the absence of at least one cell (2) moved to an additional semi-block (3b). As a result, the new space (7) is created in the additional semi-block (3b) due to the absence of at least n-1 number of cells (2).

Finally, to complete the battery (1) of the invention, an additional last step is needed to connect the management system (4) and the connectors (5) in the distribution in an optimal way. To do this, the management system (4) is placed in the previous space (6), in the semi-block (3a) where previously there was at least one cell (2) that has been displaced and at least part of a connector (5) is connected in the new space (7) created in the additional semi-block (3b) by the absence of at least n-1 cells (2).

Thanks to this optimization method of the cell (2) distribution of a battery, the battery (1) of the invention is achieved, characterized by being more compact, given that the length has decreased to a greater extent than the battery height and width have increased (1). In other words, the battery (1) meets the following requirements;

$$(L+Lg+Lc) - (L+l) > (ac+a)-a; \qquad (L+Lg+Lc) - (L+l) > (hc+h)-h$$

**Claims**

1. Battery (1) for electric bicycles comprising a total number N of cells (2) distributed in a plurality of blocks (3) of a number n of cells (2), a management system (4) for batteries (1) and at least one connector (5), where the blocks (3) are arranged lengthwise one after the other between a first end (1a) of the battery (1) and a second end (1b) of the battery (1), where the battery (1) is **characterized by** further comprising:

   - one semi-block (3a) having a number of cells (2) at least one cell (2) fewer than n and one additional semi-block (3b) comprising at least one cell (2), the semi-block (3a) and the additional semi-block (3b) being arranged lengthwise one after the other at the first end (1a) of the battery (1), such that
   - the battery (1) comprises at least first and second spaces (6, 7), where
   - the first space (6) is found in the semi-block (3a), and
   - the second space (7) is in the additional semi-block (3b), and where
   - the management system (4) and the connector (5) are provided in said spaces (6, 7).

2. Battery (1) for electric bicycles according to claim 1, where the management system (4) is integrated into the first space (6) and in part of the second space (7) and where at least one part of the connectors (5) is integrated into the second space (7).

3. Battery (1) for electric bicycles according to claim 1, where the additional semi-block (3b) together with the connectors (5) coupled in the first space (7) comprise a length (l) less than the sum of the length of the management system (Lg) and the length of the connectors (Lc) separately.

4. Optimization method of a battery (1) for electric bicycles that starts in a battery which comprises a total number N of cells (2) distributed in a plurality of blocks (3) of a number n of cells (2) and optionally a semi-block (3a) of a number n' of cells (2), a battery management system (4) and at least one connector (5), where the blocks (3) and the semi-block (3a) are arranged lengthwise ones after the others between a first end (1a) of the battery (1) and a second end (1b) of the battery (1), where the optimization method of the invention is **characterized by** comprising the steps of:

- separating at least one cell (2) from a block (3) or semi-block (3a) at said first end (1a) of the battery (1),
- placing the cell (2) lengthwise after said block (3) or semi-block (3a) at said first end (3a) of the battery (1) so that it creates an additional semi-block (3b),
- such that at least first and second spaces (6, 7) are created, where the first space (6) is the space created in the semi-block (3a) at said first end (1a) due to the absence of at least one cell (2) and where the second space (7) is created in the additional semi-block (3b) by the absence of at most n-1 number of cells (2),
- providing the management system (4) in the first space (6) and part of the second space (7), and
- providing at least one part of the connector (5) in the second space (7).

5. Optimisation method according to claim 4, where the number N of cells (2) is a multiple of the number B of blocks (3), where the block (3) at the end (1a) of the battery (1) becomes a semi-block (3a) due to said separating at least one cell (2).

6. Optimisation method according to claim 4, where the number N of cells (2) is not a multiple of the number B of blocks (3) and semi-blocks (3a), where the semi-block (3a) initially at the end (1a) of the battery (1) is left with at most n'-1 cells (2).

**Patentansprüche**

1. Batterie (1) für Elektrofahrräder, die eine Gesamtzahl N von Zellen (2), die in einer Vielzahl von Blöcken (3) mit einer Anzahl n von Zellen (2) verteilt sind, ein Verwaltungssystem (4) für Batterien (1) und mindestens ein Anschlussteil (5) umfasst, wobei die Blöcke (3) in Längsrichtung hintereinander zwischen einem ersten Ende (1a) der Batterie (1) und einem zweiten Ende (1b) der Batterie (1) angeordnet sind, wobei die Batterie (1) **dadurch gekennzeichnet ist, dass** sie ferner umfasst:

- einen Halbblock (3a) mit einer Anzahl von Zellen (2), die um mindestens eine Zelle (2) kleiner als n ist, und einen zusätzlichen Halbblock (3b), der mindestens eine Zelle (2) umfasst, wobei der Halbblock (3a) und der zusätzliche Halbblock (3b) in Längsrichtung hintereinander am ersten Ende (1a) der Batterie (1) angeordnet sind, so dass
- die Batterie (1) mindestens einen ersten und einen zweiten Raum (6, 7) umfasst, wobei
- sich der erste Raum (6) in dem Halbblock (3a) befindet, und
- der zweite Raum (7) sich in dem zusätzlichen Halbblock (3b) befindet, und wobei
- das Verwaltungssystem (4) und das Anschlussteil (5) in den genannten Räumen (6, 7) vorgesehen sind.

2. Batterie (1) für Elektrofahrräder nach Anspruch 1, wobei das Verwaltungssystem (4) in den ersten Raum (6) und in einen Teil des zweiten Raums (7) integriert ist und wobei mindestens ein Teil der Anschlussteile (5) in den zweiten Raum (7) integriert ist.

3. Batterie (1) für Elektrofahrräder nach Anspruch 1, wobei der zusätzliche Halbblock (3b) zusammen mit den im ersten Raum (7) gekoppelten Anschlussteilen (5) eine Länge (I) umfasst, die geringer ist als die Summe der Länge des Verwaltungssystems (Lg) und der Länge der einzelnen Anschlussteile (Lc).

4. Verfahren zur Optimierung einer Batterie (1) für Elektrofahrräder, das von einer Batterie ausgeht, die eine Gesamtzahl N von Zellen (2), die auf eine Vielzahl von Blöcken (3) mit einer Anzahl n von Zellen (2) und gegebenenfalls einen Halbblock (3a) mit einer Anzahl n' von Zellen (2) verteilt sind, ein Batterieverwaltungssystem (4) und mindestens ein Anschlussteil (5) umfasst, wobei die Blöcke (3) und der Halbblock (3a) in Längsrichtung hintereinander zwischen einem ersten Ende (1a) der Batterie (1) und einem zweiten Ende (1b) der Batterie (1) angeordnet sind, wobei das erfindungsgemäße Verfahren zur Optimierung **dadurch gekennzeichnet ist, dass** es die folgenden Schritte umfasst:

- Trennen mindestens einer Zelle (2) von einem Block (3) oder Halbblock (3a) am ersten Ende (1a) der Batterie (1),
- Anordnen der Zelle (2) in Längsrichtung hinter dem Block (3) oder Halbblock (3a) am ersten Ende (3a) der Batterie (1), so dass ein zusätzlicher Halbblock (3b) entsteht,

- so dass mindestens ein erster und ein zweiter Raum (6, 7) geschaffen werden, wobei der erste Raum (6) der Raum ist, der in dem Halbblock (3a) am ersten Ende (1a) aufgrund des Fehlens von mindestens einer Zelle (2) geschaffen wird, und wobei der zweite Raum (7) in dem zusätzlichen Halbblock (3b) aufgrund des Fehlens von höchstens n-1 Zellen (2) geschaffen wird,

- Bereitstellung des Verwaltungssystems (4) im ersten Raum (6) und einem Teil des zweiten Raums (7), und

- Bereitstellung mindestens eines Teils des Anschlussteils (5) im zweiten Raum (7).

5. Verfahren zur Optimierung nach Anspruch 4, wobei die Anzahl N von Zellen (2) ein Vielfaches der Anzahl B von Blöcken (3) ist, wobei der Block (3) am Ende (1a) der Batterie (1) durch die besagte Trennung mindestens einer Zelle (2) zu einem Halbblock (3a) wird.

6. Verfahren zur Optimierung nach Anspruch 4, wobei die Anzahl N von Zellen (2) kein Vielfaches der Anzahl B von Blöcken (3) und Halbblöcken (3a) ist, wobei der Halbblock (3a) zunächst am Ende (1a) der Batterie (1) mit höchstens n'-1 Zellen (2) verbleibt.

## Revendications

1. Batterie (1) pour vélos électriques comprenant un nombre total N de cellules (2) réparties en plusieurs blocs (3) d'un nombre n de cellules (2), un système de gestion (4) pour batteries (1) et au moins un connecteur (5), où les blocs (3) sont disposés dans le sens de la longueur les uns après les autres entre une première extrémité (1a) de la batterie (1) et une seconde extrémité (1b) de la batterie (1), où la batterie (1) est **caractérisée par le fait qu'**elle comprend également:

   - un semi-bloc (3a) disposant d'un nombre de cellules (2) équivalent à au moins une cellule (2) de moins que n et d'un semi-bloc supplémentaire (3b) comprenant au moins une cellule (2), le semi-bloc (3a) et le semi-bloc supplémentaire (3b) étant disposés dans le sens de la longueur l'un après l'autre sur la première extrémité (1a) de la batterie (1), de telle sorte que :
   - la batterie (1) comprend au moins les premier et second espaces (6, 7), où
   - le premier espace (6) est situé dans le semi-bloc (3a), et
   - le second espace (7) se trouve dans le semi-bloc supplémentaire (3b), et
   - le système de gestion (4) et le connecteur (5) sont logés dans lesdits espaces (6, 7).

2. Batterie (1) pour vélos électriques conformément à la revendication 1, où le système de gestion (4) est intégré dans le premier espace (6) et dans une partie du second espace (7) et où au moins une partie des connecteurs (5) est intégrée dans le second espace (7).

3. Batterie (1) pour vélos électriques conformément à la revendication 1, où le semi-bloc supplémentaire (3b) et les connecteurs (5) logés dans le premier espace (7) comprennent une longueur (l) inférieure à la somme de la longueur du système de gestion (Lg) et la longueur des connecteurs (Lc) séparément.

4. Méthode d'optimisation d'une batterie (1) pour vélos électriques qui commence dans une batterie comprenant un nombre total N de cellules (2) réparties en plusieurs blocs (3) d'un nombre n de cellules (2) et en option un semi-bloc (3a) ayant un nombre n' de cellules (2), un système de gestion (4) de batterie et au moins un connecteur (5), où les blocs (3) et le semi-bloc (3a) sont disposés dans le sens de la longueur les uns après les autres entre une première extrémité (1a) de la batterie (1) et une seconde extrémité (1b) de la batterie (1), où la méthode d'optimisation de l'invention est **caractérisée par le fait qu'**elle comprend les étapes suivantes:

   - séparation d'au moins une cellule (2) d'un bloc (3) ou d'un semi-bloc (3a) à ladite première extrémité (1a) de la batterie (1)
   - placement de la cellule (2) dans le sens de la longueur après ledit bloc (3) ou semi-bloc (3a) à ladite première extrémité (3a) de la batterie (1) de telle sorte qu'il crée un semi-bloc supplémentaire (3b),
   - de telle sorte qu'au moins le premier et le second espace (6, 7) sont créés, où le premier espace (6) est l'espace créé dans le semi-bloc (3a) à ladite première extrémité (1a) en raison de l'absence d'au moins une cellule (2) et où le second espace (7) est créé dans le semi-bloc supplémentaire (3b) en raison de l'absence d'au plus n-1 cellules (2),
   - fourniture du système de gestion (4) dans le premier espace (6) et une partie du second espace (7), et

- fourniture d'au moins une partie du connecteur (5) dans le second espace (7).

5. Méthode d'optimisation conformément à la revendication 4, où le nombre N de cellules (2) est un multiple du nombre B de blocs (3), où le bloc (3) à l'extrémité (1a) de la batterie (1) devient un semi-bloc (3a) en raison de ladite séparation d'au moins une cellule (2).

6. Méthode d'optimisation conformément à la revendication 4, où le nombre N de cellules (2) n'est pas un multiple du nombre B de blocs (3) et de semi-blocs (3a), où le semi-bloc (3a) initialement à l'extrémité (1a) de la batterie (1) conserve au plus n'-1 cellules (2).

# FIG.1

# FIG.2

# FIG.1a

# FIG.1b

FIG.3

FIG.4

**EP 4 109 648 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200354017 A1

- US 20140196970 A1